# EUROPÄISCHE PATENTSCHRIFT

(11) **EP 3 242 827 B1**
(45) Veröffentlichungstag und Bekanntmachung des Hinweises auf die Patenterteilung: **03.04.2019**
(21) Anmeldenummer: 15771897.4
(22) Anmeldetag: 22.09.2015
(51) Int. Cl.: B62D 1/16, B62D 1/185

(54) **LENKSÄULE MIT FLEXIBEL MONTIERBAREM LAGERSITZ**
STEERING COLUMN WITH A BEARING SEAT WHICH CAN BE MOUNTED IN A FLEXIBLE MANNER
COLONNE DE DIRECTION MUNIE D'UN SIÈGE DE PALIER À MONTAGE FLEXIBLE

(30) Priorität: 08.01.2015 DE 102015000027
(43) Veröffentlichungstag der Anmeldung: 15.11.2017
(73) Patentinhaber: ThyssenKrupp Presta AG, 9492 Eschen (LI); thyssenkrupp AG, 45143 Essen (DE)
(72) Erfinder: GSTÖHL, Eric, 9493 Mauren (LI); HAUSKNECHT, Sven, 6850 Dornbirn (AT); LOOS, Stefan-Hermann, 9426 Lutzenberg (CH); PASCH, Frank, 9472 Grabs (CH); GEISSLER, Christian, 9470 Buchs (CH)
(74) Vertreter: thyssenkrupp Intellectual Property GmbH
(86) Internationale Anmeldenummer: PCT/EP2015/071746
(87) Internationale Veröffentlichungsnummer: WO 2016/110337

(56) Entgegenhaltungen:
- CN-U- 202 574 340
- KR-A- 20080 071 323
- US-B1- 6 474 875

## Beschreibung

Die vorliegende Erfindung betrifft eine Lenksäule mit den Merkmalen des Oberbegriffs des Anspruchs 1.

Lenksäulen haben in Kraftfahrzeugen vielfältige Funktionen. Zum einen dienen sie zur Befestigung des Lenkrades und zur Lagerung der Lenkwelle oder Lenkspindel an der Karosserie. Sie dienen auch zur Befestigung von Anbauteilen wie z. B. einer Diebstahlsicherung oder von Bedienelementen. Teilweise sind die Lenksäulen auch mechanisch oder elektrisch in Axialrichtung und Vertikalrichtung verstellbar, um die Position des Lenkrades an die Anforderungen des Fahrers anpassen zu können. Schließlich sollen Lenksäulen auch bei einem Aufprall des Fahrzeugs auf ein Hindernis kontrolliert nachgeben, um Aufprallenergie des Fahrers auf das Lenkrad zu absorbieren und dadurch das Verletzungsrisiko für den Fahrer zu vermindern. Bei all diesen Anforderungen wird außerdem gefordert, dass Lenksäulen einen kleinen Bauraum beanspruchen, ein geringes Gewicht aufweisen und spiel- und geräuschfrei arbeiten.

Zudem sollen Lenksäulen möglichst preiswert sein.

Das Dokument EP 1 550 598 A1 zeigt eine Lenksäule, bei der die Steifigkeit der Manteleinheit durch gezielte Vergrößerung oder Aufweitung des Querschnitts des aus Blech gefertigten Mantelrohres erhöht wird. Die Lagerung der Lenkspindel ist dabei an ihrem unteren Ende, das in Fahrtrichtung vorne liegt und somit dem Lenkrad abgewandt ist, als Wälzlager ausgeführt. Der Lagersitz des Wälzlagers ist in einem Distanzstück oder Passstück ausgebildet, das aus Harz oder einem gummielastischen Material gefertigt ist und das Vibrationen absorbieren soll.

Das Befestigen des Passstücks am unteren Ende der Manteleinheit stellt eine Einschränkung dar, die zu unerwünschten Effekten führen kann. Darüber hinaus sind solche Passstücke insbesondere in dieser Materialkombination toleranzbehaftet und beeinflussen daher die Steifigkeit und die Eigenfrequenz der Lenksäule in nicht vorhersehbarer Weise. Insbesondere im Falle eines Crashs muss jedoch eine gute Abstützung der Lenkspindel sichergestellt sein, um unkontrollierte Bewegungen zu verhindern, die den Fahrer schädigen könnten.

In der KR 2008 0071323 A1 ist eine gattungsgemäße Lenksäule beschrieben, bei der ein Passstück in einer einteiligen, integrierten Manteleinheit befestigt ist.

Es ist deshalb Aufgabe der vorliegenden Erfindung, eine Lenksäule für ein Kraftfahrzeug zu schaffen, bei der ein Lager in verbesserter Weise montiert ist.

Diese Aufgabe wird von einer Lenksäule mit den Merkmalen des Anspruchs 1 gelöst. Vorteilhafte Weiterbildungen der Erfindung sind in den Unteransprüchen beschrieben.

Vorgeschlagen wird eine Lenksäule für ein Kraftfahrzeug mit einem Mantelrohr und einer in dem Mantelrohr um eine Längsachse drehbar in wenigstens einem Lager gelagerten Lenkspindel, wobei das Lager einen Außenring aufweist, der zur Lagerung mit einer inneren Lagerfläche zusammenwirkt, die auf der Lenkspindel angeordnet ist, wobei der Außenring in einem Passstück sitzt, sowie mit Befestigungselementen zur karosserieseitigen Befestigung der Lenksäule. Erfindungsgemäß ist ein inneres Mantelrohr, in dem in einem Wälzlager die Lenkspindel drehbar gelagert ist, gegenüber dem Mantelrohr teleskopähnlich verschieblich, wobei das Mantelrohr einen zumindest teilweise unrunden inneren Querschnitt aufweist, und das Passstück eine zu dem inneren Querschnitt des Mantelrohres kompatible äußere Umfangsgestalt sowie einen innen liegenden ringförmigen Lagersitz, wobei der zum Passstück kompatible innere unrunde Querschnitt des Mantelrohrs sich über eine Länge von mindestens der 3-fachen Lagerbreite des Lagers erstreckt.

Die Lagerbreite bezeichnet die Abmessung des Lagers in Richtung der Längsachse. Bei einem Wälzlager entspricht die Lagerbreite in der Regel der axialen Breite des Außenrings, der in einem Lagersitz aufgenommen wird.

Durch die erfindungsgemäße Anordnung bietet sich die Möglichkeit, ohne aufwendiges und kostenintensives mechanisches Bearbeiten ein Lager in einem Mantelrohr mit einem zumindest teilweise unrunden inneren Querschnitt aufzunehmen und an einer vorteilhaften Position in Bezug zur Längsachse zu fixieren. Dabei kann die Längsposition einerseits auf Eigenschwingungen hin ausgewählt werden, um Resonanzen zu unterdrücken und andererseits besonders fest fixiert sein, um im Crashfall eine Bewegung des Lagers im Mantelrohr zu verhindern. Unter "unrund" sind jegliche Querschnittsformen zu verstehen, die keinen kreisrunden Querschnitt aufweisen. Der zum Passstück kompatible innere unrunde Querschnitt des Mantelrohrs ist so zu verstehen, dass dieser im Rahmen der Montage kompatibel ist, so dass das Passstück in den inneren unrunden Querschnitt eingebracht werden kann, bevorzugt im Formschluss bezüglich einer Verdrehung um die Längsachse, und an einer vorgegebenen Längsposition fixiert werden kann, beispielsweise durch eine Verstemmung.

Das Lager kann sowohl als Gleitlager ausgeführt sein, mit einem als Lagerbuchse ausgebildeten Außenring, oder als Wälzlager. Ein solches Wälzlager umfasst mindestens einen Wälzkörper einen Außenring und bevorzugt einen Innenring. Vorzugsweise sind die Wälzkörper als Kugeln ausgebildet, die zwischen dem Außenring und dem Innenring angeordnet sind.

Vorzugsweise weist das Mantelrohr einen in Richtung der Längsachse im wesentlichen gleichförmigen Querschnitt auf, so dass das Passstück an verschiedenen Stellen innerhalb des Mantelrohres, je nach Ausführung der Lenksäule, positioniert werden kann. Das bedeutet, dass das Mantelrohr zumindest an seiner inneren Fläche einen zum Passstück kompatiblen Querschnitt senkrecht zur Längsachse aufweist, der sich über mindestens 60% der Länge des Mantelrohrs in Richtung der Längsachse erstreckt. Bevorzugt erstreckt sich der gleiche Querschnitt über die gesamte Länge des Mantelrohrs. Ein Mantelrohr mit einem im Wesentlichen gleichförmigen Querschnitt kann besonders vorteilhaft aus einem Strangpressprofil hergestellt sein. Dabei wird das Strangpressprofilhalbzeug auf die entsprechende Länge abgelängt, so dass Rohlinge des Mantelrohrs entstehen. Anschließend werden die entsprechenden Funktionselemente , beispielsweise Bohrungen und Langlöcher, eingebracht.

Insbesondere kann dann in das Strangpressprofil, dass in einer inneren Fläche eine unrunde Kontur aufweist, das Passstück mit einer äußeren kompatiblen unrunden Kontur eingeschoben, in der gewünschten Längsposition positioniert und anschließend fixiert werden. Gleichzeitig wird es möglich für, Lenksäulen mit verschiedenen Bauteillängen dieselben Komponenten einzusetzen.

Bevorzugt sind am Strangpressprofil zur Ausbildung des Mantelrohrs ausschließlich Bohrungen oder Langlöcher, sowie Planflächen durch Nachbearbeitung eingebracht. Die Ausnehmung dienen bevorzugt als Funktionselemente, beispielsweise zur Ausbildung von Verstelllanglöchern und/oder Bohrungen zum Hindurchführen der Spannachse oder zur Aufnahme weiterer Bauelemente. Planflächen können vor allem in den Bereichen der Außenflächen des Mantelrohrs vorgesehen sein, die als Kontaktflächen zur Paarung mit anderen Bauelementen vorgesehen sind. Durch diese Planflächen wird eine gute Paarung begünstigt.

Insbesondere kann das Passstück eine kreisringförmige Grundform und wenigstens einen außen angeformten Ansatz aufweisen. Diese Gestaltung bietet nach dem Einbringen des Passstückes in den kompatiblen inneren unrunden Querschnitt des Mantelrohrs eine formschlüssig drehfeste Verbindung mit dem Mantelrohr.

Bevorzugt ist das Passstück als Strangpressbauteil hergestellt. Denkbar und möglich ist es das Passtück als Druckgussbauteil aus Aluminium oder Kunststoff darzustellen.

Vorzugsweise ist das Passstück rotationssymmetrisch, so dass es in mehreren gleichwertigen Stellungen in das Mantelrohr einsetzbar ist. Dies vereinfacht die Montage.

Bevorzugt ist das Passstück in das Mantelrohr mit Übermaß eingebracht und/oder mit diesem verstemmt und/oder stoffschlüssig verbunden , oder mit einer Schraube fixiert. Unter Übermaß ist eine Übergangspassung oder eine leichte Presspassung zu verstehen, so dass ein Einbringen des Passstücks in den inneren Querschnitt mit einer geringen Kraft erfolgen kann. Das Verstemmen kann durch Umformen des Mantelrohrs erfolgen, so dass eine formschlüssige axiale Sicherung des Passstücks erfolgt. Ebenfalls ist eine stoffschlüssige Fixierung des Passstückes im Mantelrohr möglich, beispielsweise durch einen Klebstoff. Des Weiteren kann das Passstück ebenfalls durch eine Schraube, die in den Mantel von außen eingeschraubt ist und das Passstück festklemmt, gesichert sein, beispielsweise durch eine sogenannte Madenschraube oder durch eine selbstschneidende Schraube, beispielsweise eine Blechschraube. Durch diese Befestigungsmethoden lässt sich eine einfache axiale Fixierung des Passstücks im Mantelrohr gewährleisten.

Wenn das Passstück durch Verstemmen oder Verschrauben im Mantelrohr fixiert wird, bietet sich der Vorteil, dass das Passstück mit reichlich Spiel in das Mantelrohr eingebracht werden kann. Anschließend wird dieses Spiel zwischen Passstück und Mantelrohr durch das Verstemmen oder Verschrauben ausgeglichen. Dadurch sitzt das Passstück nach dem Verstemmen oder Verschrauben spielfrei im Mantelrohr. Da das Passstück unter Spiel in das Mantelrohr eingebracht wurde und erst in der endgültigen Position im Mantelrohr fixiert wurde, ist das Lager frei von Zwangszuständen. Somit können die Laufeigenschaften verbessert und der Verschleiß minimiert werden.

Der innere Querschnitt des Mantelrohres kann von einer inneren Umfangsfläche begrenzt sein, die wenigstens zwei teilzylindrische Flächen und dazwischen liegende rechteckige Nuten aufweist. Dadurch kann das Passstück sicher und spielfrei gehalten werden. Dazu kann das Passstück mit dem wenigstens einen Ansatz in wenigstens eine rechteckige Nut eingreifen.

Vorzugsweise weist das Mantelrohr einen Längsschlitz auf. Somit kann ein inneres Mantelrohr, dass in dem Mantelrohr verschiebbar angeordnet ist, durch einen Spannapparat festgelegt werden. Der Spannapparat wirkt auf das Mantelrohr und ist zwischen einer Fixierstellung und Freigabestellung umschaltbar, wobei in der Freigabestellung das innere Mantelrohr gegenüber dem Mantelrohr verschiebbar ist und in der Fixierstellung das innere Mantelrohr durch eine Verschmälerung des Längsschlitzes gegenüber der Freigabestellung im Mantelrohr festgelegt ist.

Vorzugsweise begrenzen dazu die teilzylindrischen Flächen eine rohrförmige Führung, in die ein inneres Mantelrohr drehfest und axial verschieblich eingesetzt ist.

Es ist schließlich bevorzugt, wenn die Nuten und der Längsschlitz in 90°, 120° oder 180° Winkelabstand um die Längsachse des Mantelrohres verteilt sind und eine Erweiterung des im Übrigen runden Querschnitts bilden. Für 90° Winkelabstand ist die Erweiterung kreuzförmig und für 120° sternförmig ausgebildet; für 180° liegen zwei Erweiterungen radial bezüglich der Längsachse gegenüber. Es ergeben sich dadurch vorteilhafte Gestaltungsmöglichkeiten für drehfeste Verbindungen mit Bauteilen innerhalb des Mantelrohres.

Diese Lenksäule bietet den Vorteil einer kostengünstigen Herstellung und die Möglichkeit das Lager in einfacher Art und Weise ohne zusätzliche spanende Bearbeitung des Mantelrohrs aufzunehmen.

Nachfolgend wird ein Ausführungsbeispiel der vorliegenden Erfindung anhand der Zeichnung beschrieben. Es zeigen:
- Figur 1:: eine erfindungsgemäße Lenksäule in einer perspektivischen Darstellung;
- Figur 2:: die Lenksäule aus Figur 2 in einem Längsschnitt von der Seite;
- Figur 3:: die Lenksäule aus Figur 2 in einer anderen Verstellposition;
- Figur 4:: die Lenksäule aus Figur 2 und Figur 3 in zusammengeschobener Stellung nach einem Aufprall;
- Figur 5:: die Lenksäule aus Figur 1 in einer perspektivischen Ansicht von der dem Lenkrad abgewandten Seite her;
- Figur 6:: einen Querschnitt durch die Lenksäule im Bereich eines Wälzlagers;
- Figur 7:: einen perspektivischen Ausschnitt einer Lenksäulenanordnung mit separiertem innerem Mantelrohr;
- Figur 8:: einen anderen Querschnitt mit aufgesetztem Tragelement;
- Figur 9:: eine perspektivische Ansicht des Mantelrohrs mit separiertem Tragelement;
- Figur 10:: das Tragelement mit weiteren Komponenten in einer Explosionsdarstellung;
- Figur 11:: eine Darstellung entsprechend Figur 9 mit veranschaulichter Schwenkachse;
- Figur 12:: eine schematische Darstellung der Fertigung des Mantelrohres im Strangpressverfahren mit angedeuteten Trennstellen für die Auftrennung des Strangpressprofils in einzelne Rohlinge für Mantelrohre;
- Figur 13:: Mantelrohre in verschiedener Länge mit Veranschaulichung der einheitlichen Lage eines Funktionsbereichs;
- Figur 14:: eine Seitenansicht ähnlich Figur 13 mit der Darstellung von zwei inneren Mantelrohren, bei denen ebenfalls die Lage eines Funktionsbereichs dargestellt ist; sowie
- Figur 15:: eine Lenksäule mit einer alternativen Anordnung des Passstücks im Mantelrohr.

Gleiche oder vergleichbare Bauelemente in verschiedenen Ausführungsbeispielen tragen dieselben Bezugsziffern.

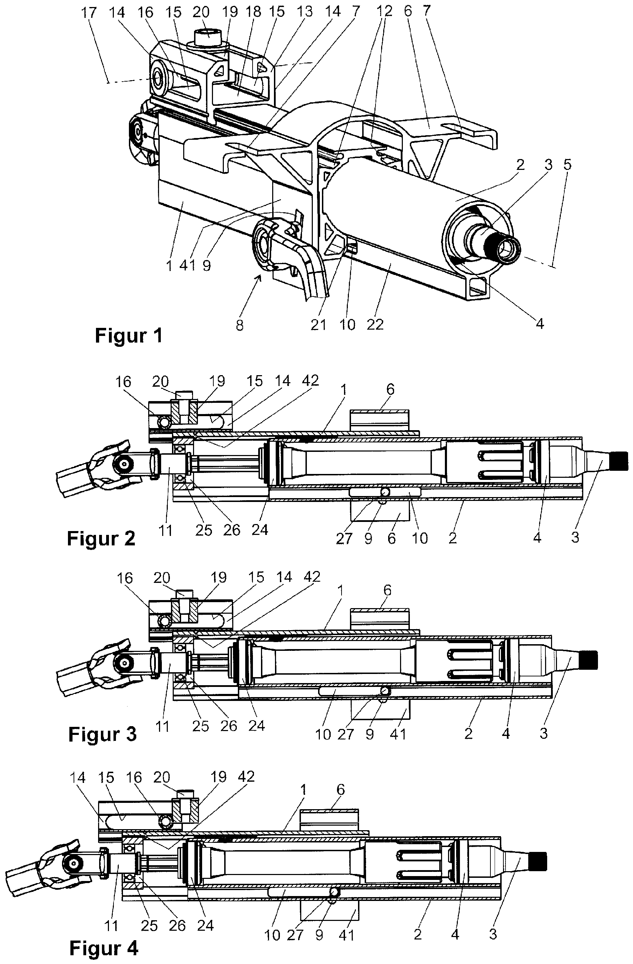

In der Figur 1 ist in perspektivischer Ansicht eine Lenksäule mit einem Mantelrohr 1 und einem inneren Mantelrohr 2 dargestellt. Das innere Mantelrohr trägt in seinem Inneren eine obere Lenkspindel 3, die in einem Wälzlager 4 um eine Längsachse 5 drehbar gelagert ist. Die Längsachse 5 definiert eine Axialrichtung der Lenksäulenanordnung, in der das innere Mantelrohr 2 gegenüber dem Mantelrohr 1 teleskopähnlich verschieblich ist. Das Mantelrohr 1 kann bei dieser Ausführung auch als äußeres Mantelrohr bezeichnet werden.

Das Mantelrohr 1 ist in einer Konsole 6, die auch als Befestigungselement bezeichnet werden kann, gehalten, die mit Ausschnitten 7 zur Befestigung der Konsole 6 an einer Fahrzeugkarosserie versehen ist und weiterhin zwei parallele und beabstandeten Seitenwangen 41 versehen ist, zwischen denen sich das Mantelrohr 1 erstreckt. Die Konsole 6 weist weiter einen Spannapparat 8 auf, der die Konsole 6 quer zu der Längsachse 5 durchsetzt und der eine Höhenverstellung des Mantelrohrs 1 gegenüber der Konsole 6 und eine Axialverstellung des inneren Mantelrohrs 2 gegenüber dem Mantelrohr 1 erlaubt. Zu diesem Zweck ist die Konsole 6 mit Führungsschlitzen 9 versehen und das innere Mantelrohr 2 ist mit einem Führungsschlitz 10 versehen.

Das Mantelrohr 1 trägt weiter eine untere Lenkwelle oder Lenkspindel 11, die in einem hier nicht sichtbaren Wälzlager innerhalb des Mantelrohrs 1 gelagert ist. Die obere Lenkspindel 3 und die untere Lenkspindel 11 sind drehfest, aber teleskopierbar miteinander verbunden, wie dies im Stand der Technik üblich ist. Die untere Lenkspindel 11 ist mit einem kardanischen Gelenk drehfest verbunden.

Das Mantelrohr 1 weist an seiner Oberseite einander abgewandte Längsnuten 12 auf, in die ein Tragelement 13 eingreift. Das Tragelement 13 ist in den Nuten schlittenartig in Richtung der Längsachse 5 auf das Mantelrohr 1 aufgesetzt und dort befestigt. Das Tragelement 13 greift dazu klammerartig in die Nuten 12 ein und umgreift den zwischen den Nuten 12 liegenden oberen äußeren Abschnitt des Mantelrohrs 1. Die Befestigung kann durch Verstemmen oder Kleben erfolgen. Ebenfalls kann das Tragelement 13 mit Übermaß in die Nuten 12 eingepresst sein. Das Tragelement 13 weist weiterhin Seitenwände 14 auf, die sich in montiertem Zustand gemäß Figur 1 von den Nuten 12 nach oben erstrecken und die mit ihren Flachseiten parallel zu der Längsachse 5 sowie mit ihren kurzen Stirnseiten quer zu der Längsachse 5 orientiert sind. Die Seiten 14 sind jeweils mit einer länglichen Ausnehmung 15 versehen, deren Längsachse parallel zu der Längsachse 5 orientiert ist. In den Ausnehmungen 15 quer zu der Längsachse 5 ist eine rohrförmige Buchse 16 angeordnet, die eine Schwenkachse 17 definiert. Die Schwenkachse 17 ist nach Montage der Lenksäulenanordnung in einem Kraftfahrzeug im Wesentlichen quer zu der Fahrtrichtung und horizontal ausgerichtet. Die Schwenkachse 17 dient als Lagerachse für die Vertikalverschwenkung der Lenksäule im Betrieb.

Zwischen den Seiten 14 ist in dem Tragelement 13 eine T-Nut 18 vorgesehen, die sich parallel zu der Längsachse 5 erstreckt. Die T-Nut 18 trägt in ihrem inneren freien Querschnitt einen Nutenstein 19, der mit einer Gewindeschraube 20 in dem Führungselement befestigbar ist.

Das Mantelrohr 1 weist an seiner Unterseite, die auch bei Einbau in ein Fahrzeug nach unten weist, einen Längsschlitz 21 auf, in dem ein nach unten weisender Steg 22, der in Längsrichtung der Längsachse 5 an der Unterseite des inneren Mantelrohres 2 angeformt ist, axial geführt ist. Im Betrieb ist das innere Mantelrohr 2 in dem Mantelrohr 1 verschiebbar zum Zwecke der Axialverstellung der Lenksäule, solange der Spannapparat 8 gelöst ist und sich somit in einer Freigabestellung befindet. Bei gespanntem Spannapparat 8, auch Fixierstellung genannt, wird das Mantelrohr 1 im Bereich des Längsschlitzes 21 zusammengezogen, wodurch sich der Längsschlitz gegenüber der Freigabestellung verschmälert, und das innere Mantelrohr 2 dort geklemmt ist, um die gewählte Axialposition zu fixieren. Somit wirkt das Mantelrohr 1 wie eine Schelle. Eine Breite des Längsschlitzes 21 wird beim Spannen des Spannapparates 8 reduziert. Die Breite entspricht dabei der Ausdehnung des Längsschlitzes 21 in Richtung der Spannachse 27.

Das innere Mantelrohr 2 weist weiter einen kreisrunden inneren Querschnitt auf, der unmittelbar als Sitz für ein Wälzlager 4 dienen kann. Vorzugsweise ist das Wälzlager 4 mit einem Presssitz in das innere Mantelrohr 2 eingesetzt und lagert das fahrerseitige Ende der oberen Lenkspindel 3 drehbar.

In der Figur 2 ist die Lenksäule aus Figur 1 in einem Längsschnitt von der Seite dargestellt.

Die Figur 2 zeigt den inneren Aufbau der Lenksäule, der ein zweites Wälzlager 24 zur Lagerung des lenkradabgewandten Endes der oberen Lenkspindel 3 umfasst. Das zweite Wälzlager 24 ist ebenso wie das erste Wälzlager 4 in das innere Mantelrohr 2 eingesetzt. Es ist weiter dargestellt, wie die untere Lenkspindel 11 in die obere Lenkspindel 3 eingreift. Die beiden Bauelemente weisen jeweils einen unrunden, beispielsweise kleeblattförmigen, und zueinander spielfrei passenden Querschnitt auf, so dass sie drehfest, aber axial verschieblich und teleskopierbar ineinander geführt sind. Aufgrund dieser Führung benötigt die untere Lenkspindel 11 nur ein Wälzlager zur drehbaren Lagerung. Das Wälzlager 25 ist mittels eines Passstücks 26 in das Mantelrohr 1 an dessen freiem Ende, welches nicht von dem inneren Mantelrohr 2 durchsetzt ist, eingesetzt. Das Passstück 26 ist mittels einer Verstemmung 42 gegen Verschiebung in Richtung der Längsachse 5 in dem Mantelrohr 1 gesichert. Diese Verstemmung 42 ist durch eine lokale Materialumformung des Mantelrohrs 1 ausgebildet. Die Umformung erfolgte dabei von außen.

Figur 2 veranschaulicht auch die relative Position des inneren Mantelrohres 2 zu dem Mantelrohr 1. Die hier dargestellte Position entspricht einer Mittelstellung innerhalb des Verstellbereichs für Längsverstellung in Richtung der Längsachse 5, der dem Fahrer zur Anpassung des Lenkradabstandes zur Verfügung steht. Dies ist erkennbar daran, dass eine Spannachse 27 des ansonsten hier nicht sichtbaren Spannapparates 8 mittig in dem Führungsschlitz 10 liegt. Weiter ist in der Position gemäß Figur 2 die Buchse 16 in der Ausnehmung an einem lenkradfernen Ende positioniert. Der Nutenstein ist in der T-Nut 18 unmittelbar anliegend an der Buchse 16 befestigt, so dass die Buchse 16 zwischen dem Ende der Ausnehmung 15 und dem Nutenstein 19 festgelegt ist.

Figur 2 zeigt also eine mittlere Einstellung der Lenksäule bei normalem Betriebszustand.

In der Figur 3, die im Wesentlichen der Figur 2 entspricht, ist das innere Mantelrohr 2 gegenüber dem Mantelrohr 1 nach links in das Mantelrohr 1 hinein verschoben, so dass die Spannachse 27 an dem lenkradnahen Ende des Führungsschlitzes 10 anliegt. Diese Position entspricht einer Axialverstellung durch den Fahrer, bei der das Lenkrad den im normalen Fahrbetrieb größtmöglichen Abstand vom Fahrer aufweist.

Die Figur 4 zeigt die Lenksäule nach dem so genannten Crashfall, also nach einem Frontalaufprall des Fahrzeugs auf ein Hindernis, bei dem der Fahrer auf das Lenkrad prallt. Ausgehend von der Stellung gemäß Figur 3 ist die Baugruppe aus den Mantelrohren 1 und 2, der Konsole 6 und dem Tragelement 13 nach links verschoben, also in Fahrtrichtung des Fahrzeugs nach vorne. Die Konsole rutscht dabei im Bereich der Ausschnitte 7 aus ihren Befestigungen an der Karosserie. Der Betrag der Verschiebung entspricht der Länge der Ausnehmung 15, was daran erkennbar ist, dass die karosseriefeste Buchse 16 nun am lenkradnahen Ende der Ausnehmung 15 anliegt. Während des Aufpralls verschiebt sich also auch das Tragelement 13 unter dem Einfluss der entstehenden Kraft, welche zumindest mit einer Komponente in Richtung der Längsachse 5 wirkt, gegen die Buchse 16. Der Nutenstein 19 rutscht dabei entlang der T-Nut 18. Die mittels der Gewindeschraube 20 erzeugte Klemmkraft bewirkt dabei eine Reibung des Nutensteins 19 innerhalb der T-Nut 18, die zu einer Energieabsorption führt. Diese Energieabsorption ist gewünscht, da sie den Aufprall des Fahrers auf das Lenkrad dämpft und dadurch das Verletzungsrisiko bei einem Crash verringert.

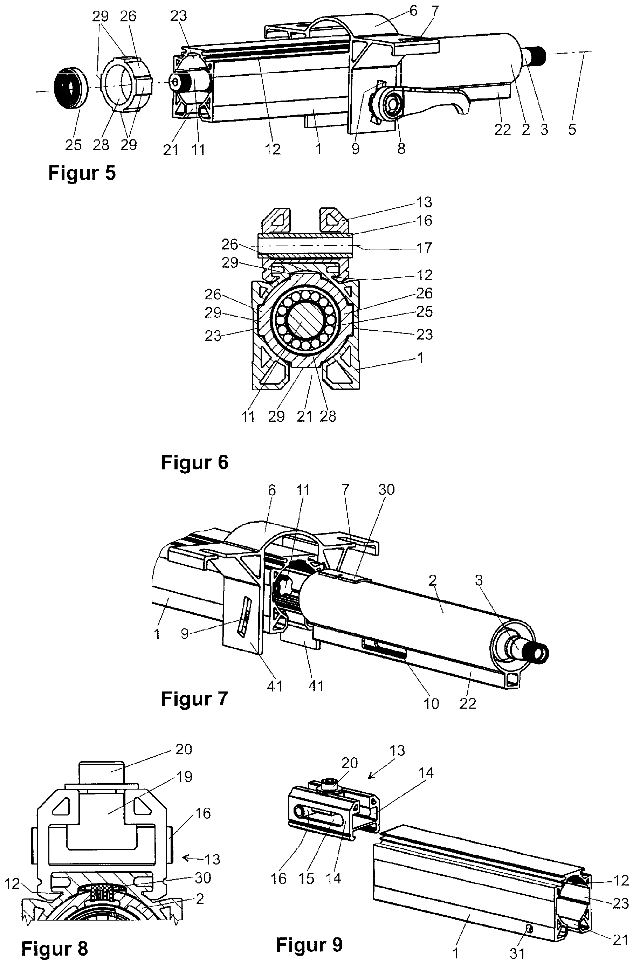

Figur 5 zeigt die Lenksäule in einer perspektivischen Ansicht auf die Lagerung der unteren Lenkspindel 11 in dem Mantelrohr 1, wobei die Lagerung hier in Explosionsdarstellung vorliegt. Das Mantelrohr ist, wie bereits oben erwähnt, als Strangpressteil gefertigt und weist deshalb über seine Längserstreckung in Richtung der Längsachse 5 im wesentlichen gleichförmigen Querschnitt auf der über die gesamte Länge bezüglich der Längsachse 5 im Wesentlichen erhalten ist, ohne das mittels Zerspanungsoperation größere Abschnitte von dem ursprünglichen Rohling zerspant wurden. Insbesondere ist der Innenraum von einer inneren Umfangsfläche begrenzt, die vier teilzylindrische Flächen und drei dazwischen liegende rechteckige Nuten 23 aufweist. Die teilzylindrischen Flächen bilden eine etwa kreiszylindrische, rohrförmige Führung, in die das innere Mantelrohr 2 eingesetzt ist. Die Nuten 23 und der unten angeordnete Längsschlitz 21 sind in 90° Winkelabstand verteilt und bilden eine kreuzförmige Erweiterung des im Übrigen runden Querschnitts.

In diese lichte Öffnung des Mantelrohres 1 wird das Passstück 26 eingesetzt, das eine kompatible äußere Umfangsfläche mit Ansätzen 29 aufweist, sowie einen kreiszylindrischen ringförmigen innen angeordneten Lagersitz 28. Der Lagersitz 28 dient zur Aufnahme des Wälzlagers 25. Der Innenring des Wälzlagers 25 wiederum nimmt den Lagersitz der unteren Lenkspindel 11 auf. Somit lagert das Wälzlager 25 die untere Lenkspindel 11 in dem Passstück 26, welche wiederum in dem Mantelrohr 1 fixiert ist. Aufgrund der Ausformung des Mantelrohres 1 und des Passstücks 26 als Strangpressteil kann die Positionierung des Passstücks 26 an nahezu beliebiger Stelle innerhalb des Mantelrohres 1 erfolgen. Die Lagerung ist deshalb für verschiedene Ausführungen, z.B. unterschiedlicher Länge mit Gleichteilen ausführbar. Während der Montage der Lenksäule wird das Passstück, entweder mit oder ohne vormontiertem Lager, an die gewünschte Stelle im Mantelrohr positioniert und anschließend durch Verschrauben und/oder Verstemmen und/oder Einpressen und/oder Kleben im Mantelrohr fixiert.

Figur 6 zeigt einen Querschnitt im Bereich der oben beschriebenen Lagerung. Es ist ersichtlich, dass das Passstück 26 mit den Ansätzen 29 in den Nuten 23 des Mantelrohres 1 drehfest einliegt und dort beispielsweise durch Verschrauben und/oder Verstemmen und/oder Einpressen und/oder Kleben im Mantelrohr fixiert sein kann.

Die Figur 7 zeigt eine perspektivische Ansicht der Lenksäule, bei der das innere Mantelrohr 2 aus dem Mantelrohr 1 heraus gezogen ist. Das innere Mantelrohr 2 ist mit seinem unten angeformten Steg 22 so ausgebildet, dass es allein aufgrund der Form drehfest in das Mantelrohr 1 passt. Weiter trägt das innere Mantelrohr 2 an seiner hinteren Oberseite eine Verdrehsicherung 30. Der Steg weist den Führungsschlitz 10 auf, der von der hier nicht dargestellten Spannachse 27 des Spannapparats 8 durchsetzt ist. Der in der Konsole 6 ausgebildete Führungsschlitz 9 entspricht Bewegungsbahn der Spannachse 27 gegenüber der Konsole 6 bei einem Verstellvorgang in vertikaler Richtung der Lenksäule im Kraftfahrzeug.

In der Figur 8 ist in einem Querschnitt die Führung des inneren Mantelrohres 2 in dem Mantelrohr 1 gezeigt. Zugleich zeigt Figur 8 das Tragelement 13 in einer Stirnansicht. Das innere Mantelrohr 2 trägt an seiner Oberseite die Verdrehsicherung 30, die in die obere Nut 23 des Mantelrohres 1 eingreift. Die Verdrehsicherung 30 kann auch aus einem selbstschmierenden Kunststoff hergestellt sein. Das Tragelement 13 mit dem darin reibschlüssig angeordneten Nutenstein 19 und der Buchse 16 wurde bereits oben beschrieben.

Figur 9 zeigt das Mantelrohr 1 mit dem Tragelement 13 in getrennter Darstellung vor dem Aufsetzen des Tragelements 13 auf das Mantelrohr 1. In dieser Darstellung ist die Lage einer Bohrung 31 veranschaulicht, die die hier nicht dargestellte Spannachse 27 aufnimmt.

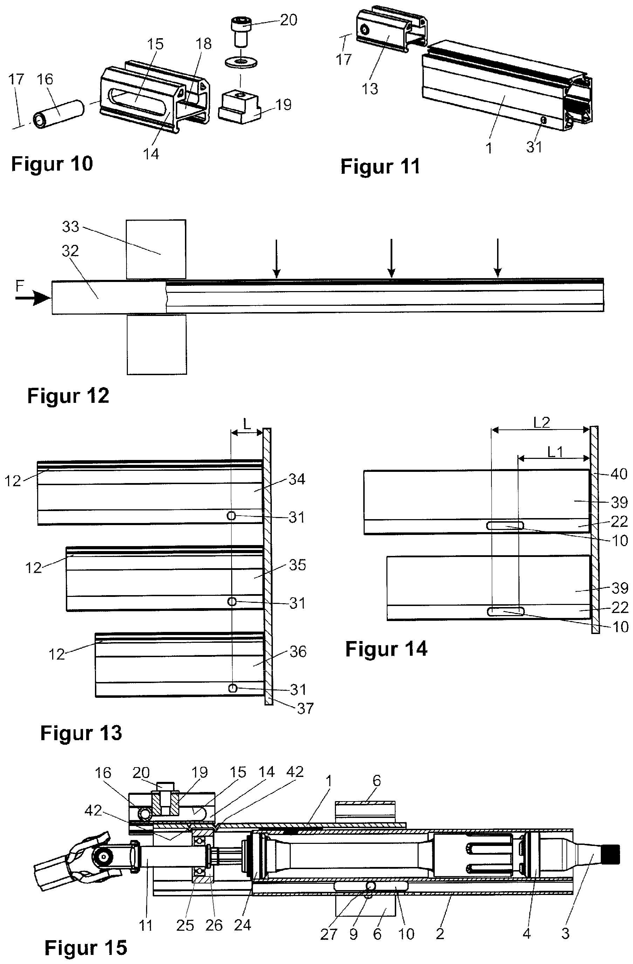

Figur 10 zeigt das Tragelement 13 mit dem Nutenstein 19 und der Buchse 16 in einer Explosionsdarstellung.

Figur 11 zeigt das Mantelrohr 1 mit dem Tragelement 13 ohne Nutenstein und Buchse in einer Darstellung wie in Figur 9.

Figur 12 veranschaulicht ein Herstellungsverfahren des Mantelrohres 1. Von der linken Seite der Figur her wird unter einer Presskraft F, bevorzugt bei erhöhter Temperatur ein Materialstrang 32, zum Beispiel aus einer Aluminiumlegierung oder Magnesiumlegierung, durch eine Form 33 gepresst. Das entstehende Formteil ist dann ein Rohling und hat die Querschnittsform des Mantelrohres 1. Zur Trennung in einzelne Werkstücke wird das Formteil an den mit Pfeilen gekennzeichneten Stellen getrennt, beispielsweise durch Sägen. Die Länge der Werkstücke kann durch Wahl der Trennstellen variiert werden.

Figur 13 zeigt, wie ein langer Rohling 34, ein mittellanger Rohling 35 und ein kurzer Rohling 36 durch Anbringen von Funktionselementen bearbeitet werden. Die Funktionselemente beschränken sich in diesem Fall auf die Bohrung 31 zur Aufnahme der Spannachse 27. Diese Bohrung 31 wird bei den drei Rohlingen 34, 35 und 36 in dem gleichen Abstand L von der rechten Stirnfläche des jeweiligen Rohlings, hier veranschaulicht durch eine Anlageplatte 37, angebracht. Alle anderen Merkmale des Mantelrohres 1 sind, wie bereits oben beschrieben wurde, allein durch die Strangpressform erzeugt worden. Dies gilt beispielsweise für die Nuten 12 und die anderen, in der Figur 13 nicht sichtbaren Merkmale des inneren Querschnitts. Allein durch das Ablängen der Rohlinge werden verschiedene Bauteillängen realisiert. Das Anbringen der Funktionselemente kann in derselben Vorrichtung erfolgen, da als Bezugsebene ausschließlich die vordere Stirnfläche benutzt wird.

Figur 14 zeigt, wie ein langer Rohling 38 und ein kurzer Rohling 39 durch Anbringen von Funktionselementen jeweils zu einem inneren Mantelrohr 2 bearbeitet werden. Die Funktionselemente beschränken sich in diesem Fall auf den Führungsschlitz 10, der in den Steg 22 eingebracht wird. Dieser Führungsschlitz 10 wird bei den beiden Rohlingen 38 und 39 in dem gleichen Bereich von L1 bis L2 gemessen von der rechten Stirnfläche des jeweiligen Rohlings angebracht, hier veranschaulicht durch eine Anlageplatte 40. Alle anderen Merkmale des inneren Mantelrohres 2 sind, wie sie bereits oben beschrieben wurden, allein durch die Strangpressform erzeugt worden. Dies gilt beispielsweise für den Steg 22 und die anderen, in der Figur 14 nicht sichtbaren Merkmale des inneren Querschnitts.

Allein durch das Ablängen der Rohlinge werden verschiedene Bauteillängen realisiert. Das Anbringen der Funktionselemente kann in derselben Vorrichtung erfolgen, da als Bezugsebene ausschließlich die vordere Stirnfläche benutzt wird.

So können in einheitlicher Aufspannung aus demselben Strangpressteil Komponenten für Lenksäulen verschiedener Längen und damit für verschiedene Fahrzeugplattformen in besonders einfacher und kostengünstiger Weise gefertigt werden.

Die Figur 15 zeigt einen alternativen Aufbau einer Lenksäule ähnlich der Figuren 1 bis 10, die ein zweites Wälzlager 24 zur Lagerung des lenkradabgewandten Endes der oberen Lenkspindel 3 umfasst. Das zweite Wälzlager 24 ist ebenso wie das erste Wälzlager 4 in das innere Mantelrohr 2 eingesetzt. Es ist weiter dargestellt, wie die untere Lenkspindel 11 in die obere Lenkspindel 3 eingreift. Die beiden Bauelemente weisen jeweils einen unrunden, beispielsweise kleeblattförmigen, und zueinander spielfrei passenden Querschnitt auf, so dass sie drehfest, aber axial verschieblich und teleskopierbar ineinander geführt sind. Aufgrund dieser Führung benötigt die untere Lenkspindel 11 nur ein Wälzlager zur drehbaren Lagerung. Das Wälzlager 25 ist mittels des Passstücks 26 in das Mantelrohr 1, welches nicht von dem inneren Mantelrohr 2 durchsetzt ist, eingesetzt. Dabei ist das Passstück 26 im Verhältnis zu der ersten Ausführungsvariante in den Figuren 1 bis 10 nicht am freien Ende des Mantelrohrs 1 angeordnet, sondern tiefer von dem lenkradabgewandten Ende aus in das Mantelrohr 1 eingebracht. Das Passstück 26 ist mittels der Verstemmungen 42 gegen Verschiebung in Richtung der Längsachse 5 in dem Mantelrohr 1 gesichert. Diese Verstemmung 42 ist durch eine lokale Materialumformung des Mantelrohrs 1 ausgebildet. Die Umformung erfolgte dabei von außen.

Durch die erfindungsgemäße Ausbildung des Mantelrohrs 1 und des Passstücks 26 kann eine variable und kostengünstige Aufnahme des Lagers in dem Mantelrohr 1 einer Lenksäule gewährleistet werden, so dass diese variable Ausgestaltung für unterschiedliche Lenksäulen für unterschiedliche Fahrzeuge zum Einsatz kommen kann.

### Bezugszeichenliste

- 1.: Mantelrohr
- 2.: inneres Mantelrohr
- 3.: Lenkspindel
- 4.: WälzlagerLängsachse
- 5.: Konsole
- 6.: AusschnitteSpannapparat
- 7.: Führungsschlitze
- 8.: Führungsschlitz
- 9.: Lenkspindel
- 10.: Nuten
- 11.: Tragelement
- 12.: Seitenwände
- 13.: Ausnehmung
- 14.: rohrförmige Buchse
- 15.: Schwenkachse
- 16.: T-Nut
- 17.: Nutenstein
- 18.: Gewindeschraube
- 19.: Längsschlitz
- 20.: Steg
- 21.: Nut
- 22.: Wälzlager
- 23.: Wälzlager
- 24.: Passstück
- 25.: Spannachse
- 26.: Lagersitz
- 27.: Ansatz
- 28.: Verdrehsicherung
- 29.: Bohrung
- 30.: Materialstrang
- 31.: Form
- 32.: Rohling
- 33.: Rohling
- 34.: Rohling
- 35.: Anlageplatte
- 36.: Rohling
- 37.: Rohling
- 38.: Anlageplatte
- 39.: Seitenwange
- 40.: Verstemmung

## Patentansprüche

1. Lenksäule für ein Kraftfahrzeug mit
- einem Mantelrohr (1) und
- einer in dem Mantelrohr (1) um eine Längsachse (5) drehbar in wenigstens einem Lager gelagerten Lenkspindel (3, 11), wobei das Lager einen Außenring aufweist, der zur Lagerung mit einer inneren Lagerfläche zusammenwirkt, die auf der Lenkspindel angeordnet ist, wobei der Außenring in einem Passstück (26) sitzt, sowie mit
- Befestigungselementen zur karosserieseitigen Befestigung der Lenksäule, **dadurch gekennzeichnet, dass**
ein inneres Mantelrohr (2), in dem in einem Wälzlager (4) die Lenkspindel (3) drehbar gelagert ist, gegenüber dem Mantelrohr (1) teleskopähnlich verschieblich ist, wobei das Mantelrohr (1) einen zumindest teilweise unrunden inneren Querschnitt aufweist, und dass das Passstück (26) eine zu dem inneren Querschnitt des Mantelrohres (1) kompatible äußere Umfangsgestalt sowie einen innen liegenden ringförmigen Lagersitz (28) aufweist, wobei der zum Passstück kompatible innere unrunde Querschnitt des Mantelrohrs (1) sich über eine Länge von mindestens der 3-fachen Lagerbreite des Lagers erstreckt.

2. Lenksäule nach Anspruch 1, **dadurch gekennzeichnet, dass** das Mantelrohr (1) an seiner inneren Fläche einen zum Passstück (26) kompatiblen Querschnitt senkrecht zur Längsachse aufweist, der sich über mindestens 60% der Länge des Mantelrohrs (1) in Richtung der Längsachse (5) erstreckt.

3. Lenksäule nach einem der vorhergehenden Ansprüche, **dadurch gekennzeichnet, dass** das Passstück (26) eine kreisringförmige Grundform und wenigstens einen außen angeformten Ansatz (29) aufweist.

4. Lenksäule nach einem der vorhergehenden Ansprüche, **dadurch gekennzeichnet, dass** das Passstück (26) rotationssymmetrisch ist.

5. Lenksäule nach einem der vorhergehenden Ansprüche, **dadurch gekennzeichnet, dass** das Passstück (26) in das Mantelrohr (1) mit Übermaß eingebracht und/oder miteinander verstemmt und/oder stoffschlüssig verbunden ist.

6. Lenksäule nach einem der vorhergehenden Ansprüche, **dadurch gekennzeichnet, dass** der innere Querschnitt des Mantelrohrs (1) von einer inneren Umfangsfläche begrenzt ist, wenigstens zwei teilzylindrische Flächen und dazwischen liegende rechteckige Nuten (23) aufweist.

7. Lenksäule nach Anspruch 6, **dadurch gekennzeichnet, dass** das Mantelrohr (1) einen Längsschlitz (21) aufweist.

8. Lenksäule nach Anspruch 6 oder 7, **dadurch gekennzeichnet, dass** das Passstück (26) mit dem wenigstens einen Ansatz (29) in wenigstens eine rechteckige Nut (23) eingreift.

9. Lenksäule nach einem der Ansprüche 6 bis 8, **dadurch gekennzeichnet, dass** die teilzylindrischen Flächen eine rohrförmige Führung begrenzen, in die ein inneres Mantelrohr (2) drehfest und axial verschieblich eingesetzt ist.

10. Lenksäule nach einem der Ansprüche 7 bis 9, **dadurch gekennzeichnet, dass** die Nuten (23) und der Längsschlitz (21) in 90°, 120° oder 180° Winkelabstand verteilt sind und eine Erweiterung des im Übrigen runden Querschnitts bilden.

## Claims

1. Steering column for a motor vehicle, comprising
- a casing tube (1) and
- a steering spindle (3, 11) which is mounted in at least one bearing in the casing tube (1) so as to be rotatable about a longitudinal axis (5), wherein the bearing comprises an outer ring which, for the mounting, interacts with an inner bearing surface which is arranged on the steering spindle, wherein the outer ring fits in an adaptor (26), and comprising
- fastening elements for fastening the steering column on the vehicle body, **characterized in that** an inner casing tube (2) in which the steering spindle (3) in mounted rotatably in a rolling bearing (4) is displaceable in relation to the casing tube (1) in the manner of a telescope, wherein the casing tube (1) has an at least partially non-circular inner cross section, and **in that** the adaptor (26) comprises an outer circumferential configuration which is compatible with the inner cross section of the casing tube (1) and an interior annular bearing seat (28), wherein the inner non-circular cross section of the casing tube (1) that is compatible with the adaptor extends over a length of at least 3 times the bearing width of the bearing.

2. Steering column according to Claim 1, **characterized in that** the inner surface of the casing tube (1) has, perpendicular to the longitudinal axis, a cross section which is compatible with the adaptor (26) and extends over at least 60% of the length of the casing tube (1) in the direction of the longitudinal axis (5).

3. Steering column according to either of the preceding claims, **characterized in that** the adaptor (26) has a circular ring-shaped basic shape and at least one lug (29) integrally formed on the outside.

4. Steering column according to one of the preceding claims, **characterized in that** the adaptor (26) is rotationally symmetrical.

5. Steering column according to one of the preceding claims, **characterized in that** the adaptor (26) is introduced into the casing tube (1) with an excess size and/or is caulked thereto and/or is connected thereto in an integrally bonded manner.

6. Steering column according to one of the preceding claims, **characterized in that** the inner cross section of the casing tube (1) is bounded by an inner circumferential surface, comprises at least two partially cylindrical surfaces and rectangular grooves (23) located in between.

7. Steering column according to Claim 6, **characterized in that** the casing tube (1) comprises a longitudinal slot (21).

8. Steering column according to Claim 6 or 7, **characterized in that** the adaptor (26) engages by means of the at least one lug (29) in at least one rectangular groove (23).

9. Steering column according to one of Claims 6 to 8, **characterized in that** the partially cylindrical surfaces bound a tubular guide into which an inner casing tube (2) is inserted for rotation therewith and in an axially displaceable manner.

10. Steering column according to one of Claims 7 to 9, **characterized in that** the grooves (23) and the longitudinal slot (21) are distributed at an angular distance of 90°, 120° or 180° and form an extension of the otherwise round cross section.

## Revendications

1. Colonne de direction pour un véhicule automobile, avec
- un tube d'enveloppe (1) et
- un arbre de direction (3, 11) supporté dans le tube d'enveloppe (1) de façon rotative autour d'un axe longitudinal (5) dans au moins un palier, dans laquelle le palier présente un anneau extérieur, qui coopère pour le support avec une face d'appui intérieure qui est disposée sur l'arbre de direction, dans laquelle l'anneau extérieur est logé dans une pièce d'ajustement (26), ainsi qu'avec
- des éléments de fixation pour la fixation de la colonne de direction à la carrosserie,
**caractérisée en ce qu'**un tube d'enveloppe intérieur (2), dans lequel l'arbre de direction (3) est supporté de façon rotative dans un palier à roulement (4), est déplaçable de façon télescopique par rapport au tube d'enveloppe (1), dans laquelle le tube d'enveloppe (1) présente une section transversale intérieure au moins en partie non ronde, et **en ce que** la pièce d'ajustement (26) présente une forme périphérique extérieure compatible avec la section transversale intérieure du tube d'enveloppe (1) ainsi qu'un siège de palier annulaire (28) situé à l'intérieur, dans laquelle la section transversale intérieure non ronde du tube d'enveloppe (1), compatible avec la pièce d'ajustement, s'étend sur une longueur d'au moins 3 fois la largeur de palier du palier.

2. Colonne de direction selon la revendication 1, **caractérisée en ce que** le tube d'enveloppe (1) présente à sa surface intérieure perpendiculairement à l'axe longitudinal une section transversale compatible avec la pièce d'ajustement (26), qui s'étend sur au moins 60 % de la longueur du tube d'enveloppe (1) dans la direction de l'axe longitudinal (5).

3. Colonne de direction selon l'une quelconque des revendications précédentes, **caractérisée en ce que** la pièce d'ajustement (26) présente une forme de base annulaire ronde et au moins une protubérance formée extérieurement (29).

4. Colonne de direction selon l'une quelconque des revendications précédentes, **caractérisée en ce que** la pièce d'ajustement (26) présente la symétrie de révolution.

5. Colonne de direction selon l'une quelconque des revendications précédentes, **caractérisée en ce que** la pièce d'ajustement (26) est introduite dans le tube d'enveloppe (1) avec une surcote et/ou est matée et/ou assemblée matériellement à celui-ci.

6. Colonne de direction selon l'une quelconque des revendications précédentes, **caractérisée en ce que** la section transversale intérieure du tube d'enveloppe (1) est limitée par une face périphérique intérieure, présente au moins deux faces partiellement cylindriques et des rainures rectangulaires (23) situées entre celles-ci.

7. Colonne de direction selon la revendication 6, **caractérisée en ce que** le tube d'enveloppe (1) présente une fente longitudinale (21).

8. Colonne de direction selon la revendication 6 ou 7, **caractérisée en ce que** la pièce d'ajustement (26) s'engage avec au moins une protubérance (29) dans au moins une rainure rectangulaire (23).

9. Colonne de direction selon l'une quelconque des revendications 6 à 8, **caractérisée en ce que** les faces partiellement cylindriques limitent un guide tubulaire, dans lequel un tube d'enveloppe intérieur (2) est introduit sans rotation et de façon déplaçable axialement.

10. Colonne de direction selon l'une quelconque des revendications 7 à 9, **caractérisée en ce que** les rainures (23) et la fente longitudinale (21) sont réparties à une distance angulaire de 90°, 120° ou 180° et forment un agrandissement de la section transversale par ailleurs ronde.
